# EUROPEAN PATENT APPLICATION

(11) **EP 3 882 482 A1**
(43) Date of publication of application: **22.09.2021**
(21) Application number: 19885832.6
(22) Date of filing: 06.11.2019
(51) Int. Cl.: F16F 9/14

(54) **ROTARY DAMPER**

(30) Priority: 16.11.2018 JP 2018215179
(71) Applicant: Somic Management Holdings Inc., Sumida-ku Tokyo 130-0004 (JP)
(72) Inventor: NAKAYA, Kazumasa, Hamamatsu-shi, Shizuoka 435-0032 (JP)
(74) Representative: Zimmermann, Tankred Klaus
(86) International application number: PCT/JP2019/043465
(87) International publication number: WO 2020/100680

(57) **Abstract**

A rotary damper includes a housing and a rotor. The housing includes, inside a cylindrical surface, two plate-shaped fixed vanes. A fixed vane clearance portion is formed as such an inclined surface that both side walls of a tip end portion of the fixed vane extend inwardly in a thickness direction toward the tip end portion. The rotor includes, on an outer surface of a shaft body, two movable vanes. A movable vane clearance portion is formed as such an inclined surface that both side walls of the tip end portion of the fixed vane extend inwardly in the thickness direction toward the tip end portion. The rotor turns until part of a base portion of the movable vane enters a recessed cutout region of the fixed vane clearance portion.

## Description

### TECHNICAL FIELD

The present invention relates to a rotary damper. This rotary damper is used as a kinetic energy damping device in a turning mechanism in a four-wheeled or two-wheeled self-propelled vehicle or an industrial mechanical tool.

### BACKGROUND ART

Typically, a rotary damper is used as a kinetic energy damping device in a turning mechanism in a four-wheeled or two-wheeled self-propelled vehicle or an industrial mechanical tool. For example, in a rotary damper disclosed in Patent Literature 1 below, a shaft-shaped rotor (a rotor shaft) is supported in a reciprocatable turnable state in a housing. The housing has, at an inner peripheral portion of a tubular body, a pair of wall-shaped fixed vanes (separate blocks). The rotor includes a pair of blade-shaped movable vanes (vanes).

### CITATION LIST

### PATENT LITERATURE

PATENT LITERATURE 1: JP-A-11-82593

### SUMMARY OF INVENTION

However, the rotary damper disclosed in Patent Literature 1 above is configured such that the rotor turns only to such a position that the vanes reach oil paths opening at bores. For this reason, this rotary damper has a problem that in a case where the rotary damper is decreased in size, a turning range of the rotor is narrowed and the range of a turning mechanism to which the rotary damper can be attached is narrowed.

The present invention addresses the above-described problem. An object of the present invention is to provide the following rotary damper. This rotary damper can ensure a rotor turning range and can be attached to turning mechanisms in a wide variety of forms even in a case where the rotary damper is decreased in size.

In order to achieve the above-mentioned objet, the present invention features a rotary damper including a housing having a cylindrical inner chamber liquid-tightly housing fluid and having a fixed vane formed in a wall shape protruding toward a center portion of the inner chamber to block a flow of the fluid in a circumferential direction, and a rotor having, at an outer peripheral portion of a shaft body sliding on a tip end portion of the fixed vane, a movable vane sliding on an inner peripheral surface of the inner chamber and turning to push the fluid while dividing an inside of the inner chamber into multiple cells, comprising: at least one of a fixed vane clearance portion recessed inwardly in a thickness direction at the tip end portion of the fixed vane which slides on the shaft body or a movable vane clearance portion recessed inwardly in a thickness direction at a base portion of the movable vane facing the shaft body, wherein the rotor is turnable until part of the base portion of the movable vane enters the fixed vane clearance portion and/or part of the tip end portion of the fixed vane enters the movable vane clearance portion.

According to the feature of the present invention configured as describe above, in the rotary damper, at least one of the fixed vane or the movable vane includes the fixed vane clearance portion and/or the movable vane clearance portion recessed inwardly in the thickness direction. Thus, the rotor turns until part of the base portion of the movable vane enters the fixed vane clearance portion and/or part of the tip end portion of the fixed vane enters the movable vane clearance portion. With this configuration, the rotary damper according to the present invention can ensure a rotor turning range and can be attached to turning mechanisms in a wide variety of forms even in a case where the rotary damper is decreased in size.

Another feature of the present invention is that in the rotary damper, each of the fixed vane clearance portion and the movable vane clearance portion is provided.

According to another feature of the present invention configured as described above, the rotary damper includes each of the fixed vane clearance portion and the movable vane clearance portion. Thus, the rotor turning range can be ensured while formation of either the fixed vane or the movable vane with a smaller thickness is prevented.

The present invention also features the rotary damper, wherein the movable vane clearance portion and the fixed vane clearance portion are formed such that when the movable vane comes closest to the fixed vane, an end portion of the movable vane clearance portion on a tip end side of the movable vane contacts the fixed vane clearance portion or an end portion of the fixed vane clearance portion on a side opposite to a tip end portion of the fixed vane contacts the movable vane clearance portion.

According to still another feature of the present invention configured as described above, the rotary damper is formed such that when the movable vane comes closest to the fixed vane, the end portion of the movable vane clearance portion on the tip end side of the movable vane contacts the fixed vane clearance portion or the end portion of the fixed vane clearance portion on the side opposite to the tip end portion of the fixed vane contacts the movable vane clearance portion. Thus, damage of the movable vane and the fixed vane can be prevented. That is, in the rotary damper, in a case where the movable vane comes closest to the fixed vane and the end portion of the movable vane clearance portion on the tip end side of the movable vane contacts the fixed vane clearance portion, damage of the base portion with a smaller thickness can be prevented without the fixed vane contacting the base side of the movable vane clearance portion of the movable vane with respect to the end portion (a contact portion). Moreover, in the rotary damper, in a case where the movable vane comes closest to the fixed vane and the end portion of the fixed vane clearance portion on the side opposite to the tip end side of the fixed vane contacts the movable vane clearance portion, damage of the tip end portion with a smaller thickness can be prevented without the movable vane contacting the tip end side of the fixed vane clearance portion with respect to the end portion (a contact portion).

Still another feature of the present invention is that in the rotary damper, the movable vane clearance portion and the fixed vane clearance portion are formed as inclined surfaces configured to be in surface contact with each other.

According to still another feature of the present invention configured as described above, in the rotary damper, the movable vane clearance portion and the fixed vane clearance portion are formed as the inclined surfaces configured to be in surface contact with each other. Thus, damage of these portions due to contact therebetween can be prevented.

Still another feature of the present invention is that in the rotary damper, the movable vane clearance portion is formed only at the base portion.

According to still another feature of the present invention configured as described above, in the rotary damper, the movable vane clearance portion is formed only at the base portion as a movable vane portion connected to the shaft body. Thus, a one-way valve and a throttle valve are easily provided, and therefore, the configuration of the rotary damper can be easily decreased in size.

Still another feature of the present invention is that in the rotary damper, the fixed vane clearance portion is formed only at the tip end portion which slides on the shaft body.

According to still another feature of the present invention configured as described above, in the rotary damper, the fixed vane clearance portion is formed only at the tip end portion of the fixed vane which slides on the shaft body. Thus, stiffness of the fixed vane within a range from the base portion to the tip end portion is easily ensured. Further, the one-way valve and the throttle valve are easily provided, and therefore, the configuration of the rotary damper can be easily decreased in size.

The present invention also features the rotary damper further comprising: a communication path allowing a bidirectional or unidirectional flow of the fluid between the multiple cells in the internal chamber, wherein the communication path is not provided in the shaft body, but is provided only in at least one of the housing, the fixed vane, and the movable vane.

According to still another feature of the present invention configured as described above, in the rotary damper, the communication path allowing the bidirectional or unidirectional flow of the fluid between the multiple cells in the internal chamber is not provided in the shaft body, but is provided only in at least one of the housing, the fixed vane, and the movable vane. Thus, the diameter of the shaft body can be decreased (e.g., equal to or less than 8 mm), and therefore, the configuration of the rotary damper can be easily decreased in size.

The present invention also features the rotary damper further comprising: a bidirectional communication path allowing the bidirectional flow of the fluid between the multiple cells in the internal chamber and a unidirectional communication path allowing the unidirectional flow of the fluid, wherein the bidirectional communication path is provided in at least the shaft body, and the unidirectional communication path is not provided in the shaft body, but is provided only in at least one of the housing, the fixed vane, and the movable vane.

According to still another feature of the present invention configured as described above, in the rotary damper, the bidirectional communication path allowing the bidirectional flow of the fluid between the multiple cells in the internal chamber is provided in at least the shaft body. Further, the unidirectional communication path allowing the unidirectional flow of the fluid is not provided in the shaft body, but is provided only in at least one of the housing, the fixed vane, and the movable vane. Thus, the diameter of the shaft body can be decreased (e.g., equal to or less than 8 mm), and therefore, the configuration of the rotary damper can be easily decreased in size.

### BRIEF DESCRIPTION OF DRAWINGS

Fig. 1 is a perspective view schematically illustrating an external appearance of a rotary damper according to the present invention;
Fig. 2 is a sectional view schematically illustrating an internal configuration of the rotary damper from a 2-2 line illustrated in Fig. 1;
Fig. 3 is a sectional view schematically illustrating the internal configuration of the rotary damper from a 3-3 line illustrated in Fig. 1;
Fig. 4 is a sectional view schematically illustrating the internal configuration of the rotary damper from a 4-4 line illustrated in Fig. 1;
Fig. 5 is a sectional view illustrating a state in which a rotor of the rotary damper illustrated in Fig. 4 turns rightward as viewed in the figure and movable vanes come closest to and contact fixed vanes;
Fig. 6 is a partially-enlarged view of a configuration in a dashed circle 6 illustrated in Fig. 5;
Fig. 7 is a sectional view illustrating a state in which the rotor of the rotary damper illustrated in Fig. 4 turns leftward as viewed in the figure and the movable vanes come closest to and contact the fixed vanes;
Fig. 8 is a partially-enlarged view illustrating a state in which a movable vane of a rotor contacts a fixed vane in a rotary damper according to a variation of the present invention;
Fig. 9 is a partially-enlarged view illustrating a state in which a movable vane of a rotor contacts a fixed vane in a rotary damper according to another variation of the present invention;
Fig. 10 is a partially-enlarged view illustrating a state in which a movable vane of a rotor contacts a fixed vane in a rotary damper according to still another variation of the present invention;
Fig. 11 is a partially-enlarged view illustrating a movable vane clearance portion formed at a movable vane of a rotor in a rotary damper according to still another variation of the present invention; and
Fig. 12 is a sectional view schematically illustrating an internal configuration of a rotor in a rotary damper according to still another variation of the present invention.

### DESCRIPTION OF EMBODIMENTS

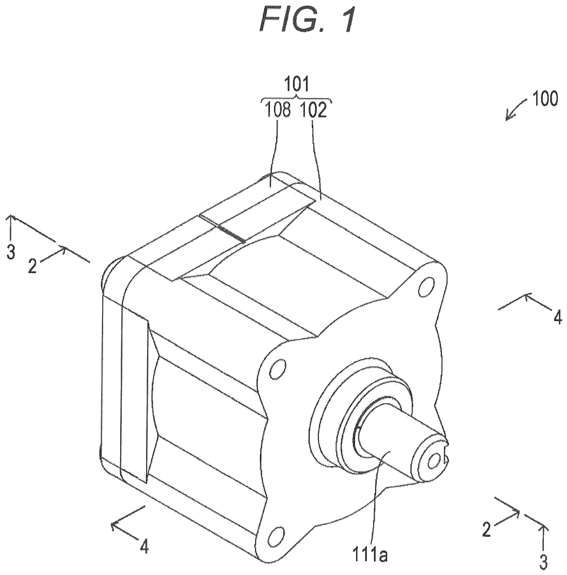

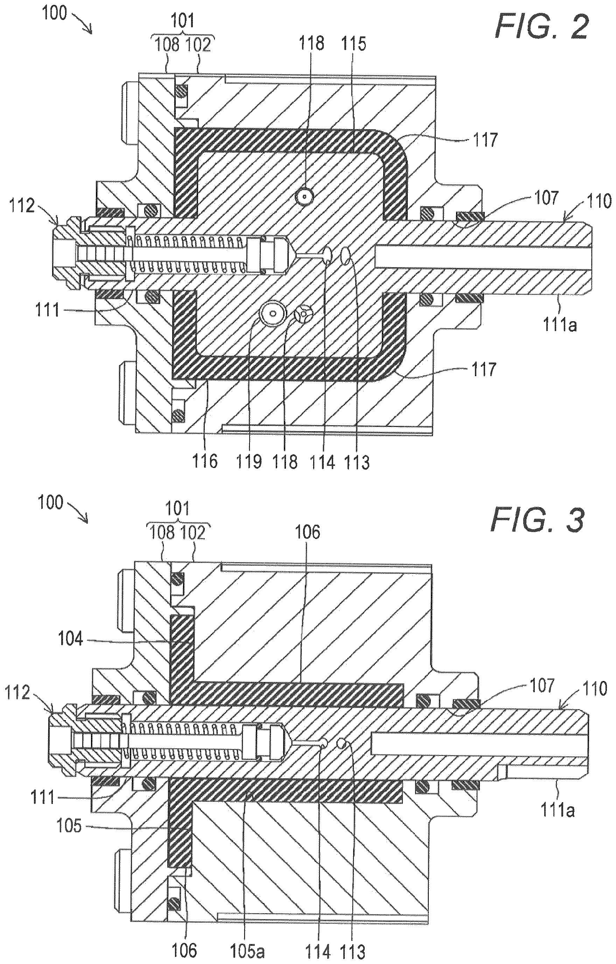

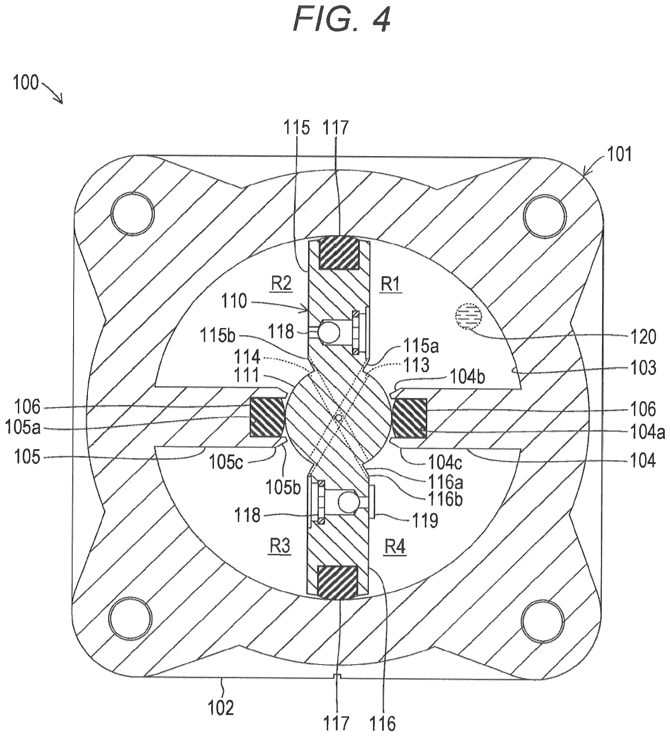

Hereinafter, one embodiment of a rotary damper according to the present invention will be described with reference to the drawings. Fig. 1 is a perspective view schematically illustrating an external appearance of a rotary damper 100 according to the present invention. Moreover, Fig. 2 is a sectional view schematically illustrating an internal structure of the rotary damper 100 from a 2-2 line illustrated in Fig. 1. Further, Fig. 3 is a sectional view schematically illustrating the internal structure of the rotary damper 100 from a 3-3 line illustrated in Fig. 1. In addition, Fig. 4 is a sectional view schematically illustrating the internal structure of the rotary damper 100 from a 4-4 line illustrated in Fig. 1.

Note that each figure as a reference in the present specification is schematically illustrated for the sake of easy understanding of the present invention, and for example, includes exaggerated illustration of some components. Thus, the dimensions, ratios, etc. of each component may vary. The rotary damper 100 is a damping device directly attached to an attachment target object (not shown) having a movable portion or attached to a prototype of the attachment target object to damp kinetic energy upon movement of the movable portion. The attachment target object having the movable portion includes, for example, a seat reclining mechanism, a tailgate, and a glove compartment opening/closing mechanism in an automobile, a base end portion of a swing arm vertically movably supporting a rear wheel of a two-wheeled self-propelled vehicle (a motorcycle), a hinge portion of an opening/closing door of furniture, and a lifting/lowering mechanism for a lifting/lowering shelf.

### (Configuration of Rotary Damper 100)

The rotary damper 100 includes a housing 101. The housing 101 is a component turnably holding a rotor 110 and forming a body of the rotary damper 100. The housing 101 is formed in such a manner that an aluminum material, an iron material, a zinc material, or various resin materials such as polyamide resin is formed in a hollow shape. More specifically, the housing 101 is formed to have a rectangular parallelepiped outer shape extending in an axial direction of the rotor 110. In this case, the housing 101 is formed in a square shape as viewed in the axial direction of the rotor 110. The housing 101 mainly includes a housing body 102 and a lid 108.

The housing body 102 is a component housing movable vanes 115, 116 of the rotor 110 and fluid 120 and turnably supporting one end portion of a shaft body 111 of the rotor 110. The housing body 102 is formed in such a bottomed cylindrical shape that one end of a tubular body opens large and the other end of the tubular body opens small. More specifically, a cylindrical inner chamber 103 and a cylindrical rotor support portion 107 are formed in the housing body 102. The inner chamber 103 is formed on a large opening side of the tubular body at one end thereof. The rotor support portion 107 is formed opening at a bottom portion of the inner chamber 103.

The inner chamber 103 is a space liquid-tightly housing the movable vanes 115, 116 of the rotor 110 and the fluid 120. The inner chamber 103 includes two semicylindrical spaces facing each other through the rotor 110 arranged at a center portion in the housing body 102. That is, an inner peripheral surface of the housing body 102 and an outer peripheral surface of the rotor 110 form the inner chamber 103. Fixed vanes 104, 105 are, integrally with the housing body 102, each formed in the two semicylindrical spaces in the inner chamber 103.

The fixed vanes 104, 105 are wall-shaped portions dividing, together with the rotor 110, the inside of the inner chamber 103 into multiple spaces. The fixed vanes 104, 105 are formed to project inwardly in a raised shape from an inner wall surface of the inner chamber 103 along an axis line direction of the housing body 102. In the present embodiment, the fixed vanes 104, 105 are configured such that plate-shaped bodies parallel with a radial direction of the rotor 110 are arranged facing each other with respect to the rotor 110. The inside of the inner chamber 103 is divided into four cells R1 to R4 by these two fixed vanes 104, 105. At each of these fixed vanes 104, 105, a groove portion 104a, 105a is formed at an outer edge portion facing each of the shaft body 111 and the lid 108 of the rotor 110, and a fixed vane clearance portion 104b, 105b is formed at a tip end portion, which is part of the outer edge portion, facing the shaft body 111.

The groove portions 104a, 105a are portions for holding seal bodies 106. The groove portions 104a, 105a are formed in a recessed groove shape along the axis line direction of the housing body 102 at end surfaces of the tip end portions of the fixed vanes 104, 105 facing the rotor 110. The seal body 106 is a component for ensuring liquid tightness of the cells R1 to R4 formed in the inner chamber 103. The seal body 106 is formed in such a manner that an elastic material such as a rubber material is formed in an L-shape as viewed laterally. The seal bodies 106 are each fitted in the groove portions 104a, 105a. That is, each tip end portion of the fixed vanes 104, 105 slides, through the seal body 106, on an outer peripheral surface of the shaft body 111 of the rotor 110.

The fixed vane clearance portions 104b, 105b are portions for ensuring a turning range of the rotor 110. Each of the fixed vane clearance portions 104b, 105b is formed at an outer peripheral surface on both sides of the groove portion 104a, 105a at the tip end portion of the fixed vane 104, 105. More specifically, each of the fixed vane clearance portions 104b, 105b is formed as such an inclined surface that both side walls of the tip end portion of the fixed vane 104, 105 extend inwardly in a thickness direction toward the tip end portion. With this configuration, each of the fixed vanes 104, 105 is formed such that the thickness thereof decreases toward a tip end side.

The inclined surfaces forming the fixed vane clearance portions 104b, 105b are formed to have such angles and lengths that end portions 115b, 116b of later-described movable vane clearance portions 115a, 116a collide with the fixed vane clearance portions 104b, 105b. In other words, the fixed vane clearance portions 104b, 105b are formed as such inclined surfaces that end portions 104c, 105c of the fixed vanes 104, 105 opposite to the tip end portions thereof are positioned outside in a radial direction of the housing body 102 with respect to the end portions 115b, 116b of the movable vane clearance portions 115a, 116a.

The rotor support portion 107 is a cylindrical portion rotatably supporting one end portion of the shaft body 111 of the rotor 110. In this case, an inner peripheral portion of the rotor support portion 107 liquid-tightly supports, through a seal body such as a bearing or a packing, the shaft body 111 of the rotor 110.

The lid 108 is a component liquid-tightly closing the inner chamber 103 formed in the housing body 102 and supporting the rotor 110. The lid 108 is configured such that a through-hole is formed at a center portion of a square plate body as viewed in an axial direction of the housing 101.

The rotor 110 is a component arranged in the inner chamber 103 of the housing 101 to divide, together with the fixed vanes 104, 105, the inside of the inner chamber 103 into the four cells R1 to R4 as four spaces and turning in the inner chamber 103 to increase/decrease each of the volumes of these four cells R1 to R4. The rotor 110 mainly includes the shaft body 111 and the movable vanes 115, 116.

The shaft body 111 is a circular rod-shaped portion supporting the movable vanes 115, 116. The shaft body 111 is made of an aluminum material, an iron material, a zinc material, or various resin materials such as polyamide resin. The shaft body 111 is supported with one end side of the shaft body 111 penetrating the rotor support portion 107. Further, a tip end portion of the shaft body 111 penetrating the rotor support portion 107 is exposed to the outside of the housing body 102, and forms a coupling portion 111a. The coupling portion 111a is a connection portion for the attachment target object to which the rotary damper 100 is to be attached. The coupling portion 111a is configured such that a key groove is formed along the axial direction at an outer peripheral surface of the circular rod body.

On the other hand, the other end portion of the shaft body 111 is formed in a hollow shape to house an accumulator 112, and is rotatably supported on the lid 108. The accumulator 112 is equipment configured to compensate for a change in the volume of the fluid 120 in the inner chamber 103 due to expansion or contraction caused by a temperature change. The accumulator 112 is provided with the accumulator 112 communicating with the inner chamber 103. The accumulator 112 is, in the shaft body 111, provided with the accumulator 112 communicating with a second bidirectional communication path 114.

Each of a first bidirectional communication path 113 and the second bidirectional communication path 114 is formed in the shaft body 111. The first bidirectional communication path 113 is a through-hole formed between the cell R1 and the cell R3 such that the fluid 120 circulates therebetween. Moreover, the second bidirectional communication path 114 is a through-hole formed between the cell R2 and the cell R4 such that the fluid 120 circulates therebetween. The second bidirectional communication path 114 also communicates with the accumulator 112. Note that a portion of the shaft body 111 provided with each of the first bidirectional communication path 113 and the second bidirectional communication path 114, i.e., a portion between the movable vane 115 and the movable vane 116, can be formed with a diameter of equal to or less than 8 mm. Note that in Fig. 4, the first bidirectional communication path 113 and the second bidirectional communication path 114 are indicated by dashed lines.

The movable vanes 115, 116 are components for dividing the inside of the inner chamber 103 into the multiple spaces and liquid-tightly increasing/decreasing each of the volumes of these spaces. Each of the movable vanes 115, 116 includes a plate-shaped body extending in a radial direction of the shaft body 111 (the inner chamber 103). In the present embodiment, the movable vanes 115, 116 are formed such that the plate-shaped bodies parallel with the radial direction of the rotor 110 extend in opposite directions (in other words, on the same virtual plane) on the outer peripheral surface of the shaft body 111. In this case, the movable vanes 115, 116 are formed to extend from portions connected with the shaft body 111 through the movable vane clearance portions 115a, 116a.

The movable vane clearance portions 115a, 116a are portions for ensuring the turning range of the rotor 110. Each of the movable vane clearance portions 115a, 116a is formed at a base portion of the movable vane 115, 116 at a boundary with the shaft body 111. More specifically, each of the movable vane clearance portions 115a, 116a is formed as such an inclined surface that both side walls of the base portion of the movable vane 115, 116 extend inwardly in a thickness direction toward the shaft body 111. With this configuration, each of the movable vanes 115, 116 is formed such that the thickness thereof decreases toward a shaft body 111 side.

The inclined surfaces forming the movable vane clearance portions 115a, 116a are formed to have such angles and lengths that the movable vane clearance portions 115a, 116a each collide with the end portions 104c, 105c of the fixed vane clearance portions 104b, 105b. In other words, the movable vane clearance portions 115a, 116a are formed as such inclined surfaces that the end portions 115b, 116b on the opposite side of the shaft body 111 are positioned inside in the radial direction of the housing body 102 with respect to the end portions 104c, 105c of the fixed vane clearance portions 104b, 105b.

At each of the movable vanes 115, 116, a recessed groove is formed at a C-shaped (or backwards C-shaped) outer edge portion facing each of an inner surface of the housing body 102 and an inner surface of the lid 108. A seal body 117 made of an elastic material such as a rubber material is fitted in such a groove. The seal body 117 is a component for ensuring the liquid tightness of the cells R1 to R4 formed in the inner chamber 103 as in the seal body 106. The seal body 117 is formed in such a manner that an elastic material similar to that of the seal body 106, such as a rubber material, is formed in a C-shape (or a backwards C-shape) as viewed laterally. Note that needless to say, these two movable vanes 115, 116 may be formed at positions shifted from the opposing directions (in other words, the same virtual plane) with respect to the shaft body 111.

These movable vanes 115, 116 are each provided with one-way valves 118. The one-way valve 118 causes the fluid 120 to flow in a limited manner between adjacent two of the cells divided by the movable vanes 115, 116. A throttle valve 119 is provided at the movable vane 116. The throttle valve 119 causes the fluid 120 to flow in a limited manner between the two adjacent cells divided by the movable vane 116.

The one-way valves 118 are configured as valves causing the fluid 120 to flow from one side to the other side between the cell R1 and the cell R2 divided by the movable vane 115 and between the cell R3 and the cell R4 divided by the movable vane 116 and blocking the flow of the fluid 120 from the other side to one side. In the present embodiment, the one-way valve 118 is configured as a valve causing the fluid 120 to flow from a cell R2/R4 side to a cell R1/R3 side and blocking the flow of the fluid 120 from the cell R1/R3 side to the cell R2/R4 side.

The throttle valve 119 is configured as a valve capable of achieving bidirectional circulation while limiting the flow of the fluid 120 between the cell R3 and the cell R4 divided by the movable vane 116. In this case, the phase "while limiting the flow of the fluid 120" by the throttle valve 119 means that as compared to flowability of the fluid 120 by the one-way valve 118, the fluid 120 is less likely to flow under the same conditions (e.g., a pressure and a fluid viscosity). With this configuration, the rotor 110 turns about an axial direction of the shaft body 111 against resistance generated when the fluid 120 flows through the throttle valve 119 between the two cells divided by the movable vane 116.

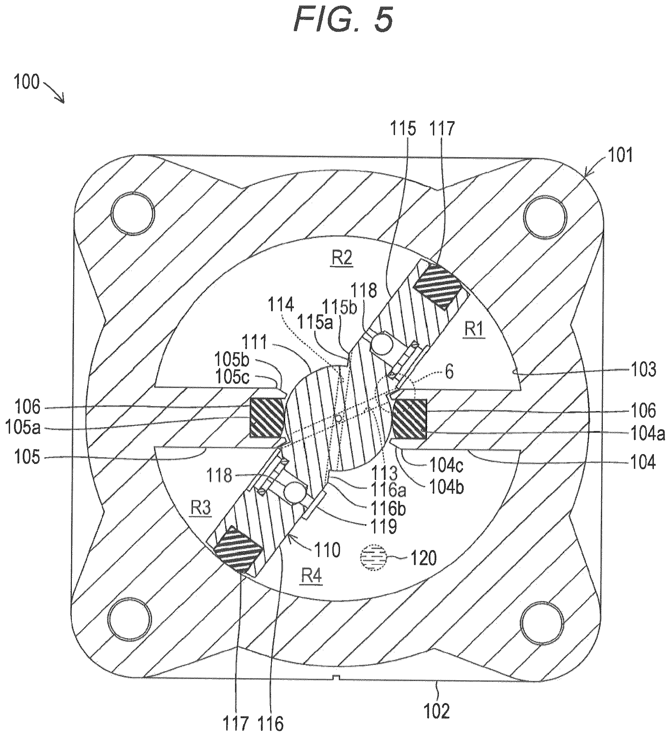

The fluid 120 is a substance providing resistance to the movable vanes 115, 116 turning in the inner chamber 103 such that a damper function acts on the rotary damper 100. The inside of the inner chamber 103 is filled with the fluid 120. The fluid 120 is made of a substance in a liquid form, a gel form, or a semi-solid form, the substance having flowability with a viscosity corresponding to the specifications of the rotary damper 100. In this case, the viscosity of the fluid 120 is selected as necessary according to the specifications of the rotary damper 100. In the present embodiment, the fluid 120 is made of oil such as mineral oil or silicone oil. Note that in Fig. 4, the fluid 120 is hatched in a dashed circle (the same also applies to Figs. 5, 7, and 12 as described later).

### (Operation of Rotary Damper 100)

Next, operation of the rotary damper 100 configured as described above will be described. The rotary damper 100 is provided between two components movably coupled to each other. Of the rotary damper 100, the housing 101 is attached to one of relatively-rotating components in the attachment target object having the movable portion or the prototype of the attachment target object, and the rotor 110 is attached to the other component, for example. The attachment target object having the movable portion includes, for example, the seat reclining mechanism, the tailgate, and the glove compartment opening/closing mechanism in the automobile, the base end portion of the swing arm vertically movably supporting the rear wheel of the two-wheeled self-propelled vehicle (the motorcycle), the hinge portion of the opening/closing door of the furniture, and the lifting/lowering mechanism for the lifting/lowering shelf.

Even in a case where the rotor 110 turns in any of clockwise and counterclockwise directions, the rotary damper 100 produces similar advantageous effects of the invention. Thus, a case where the rotor 110 turns rightward in Fig. 4 will be described first. As illustrated in Fig. 5, in the rotary damper 100, in a case where the rotor 110 turns rightward as viewed in the figure, the movable vanes 115, 116 turn rightward as viewed in the figure such that each of the volumes of the cells R1, R3 decreases and each of the volumes of the cells R2, R4 increases.

In this case, the flow of the fluid 120 from the cell R1 side to the cell R2 side is blocked by the one-way valve 118 provided at the movable vane 115, and the fluid 120 flows into the cell R3 through the first bidirectional communication path 113. Moreover, the flow of the fluid 120 from the cell R3 side to the cell R4 side is blocked by the one-way valve 118 provided at the movable vane 116, and the fluid 120 flows into the cell R4 through the throttle valve 119. Further, the fluid 120 in the cell R4 flows into the cell R2 through the second bidirectional communication path 114.

That is, the first bidirectional communication path 113, the second bidirectional communication path 114, the one-way valves 118, and the throttle valve 119 are equivalent to a communication path according to the present invention. With this configuration, in a case where the rotor 110 turns rightward as viewed in the figure, damping force is generated by the flow of the fluid 120 through the throttle valve 119 in the rotary damper 100. Note that in Fig. 5, each of the first bidirectional communication path 113 and the second bidirectional communication path 114 is indicated by a dashed line.

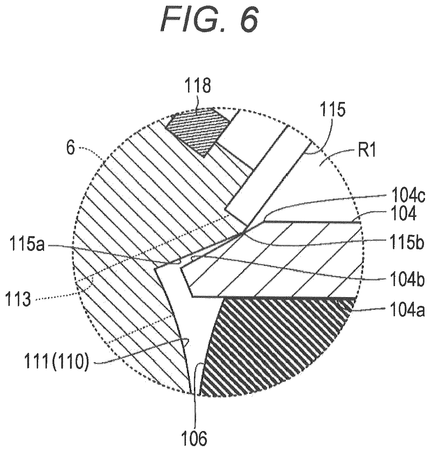

As illustrated in Fig. 6, in a case where the movable vane 115 comes closest to the fixed vane 104 and the movable vane 116 comes closest to the fixed vane 105, the rotor 110 turns until the end portions 115b, 116b of the movable vane clearance portions 115a, 116a collide with the fixed vane clearance portions 104b, 105b. That is, the rotor 110 turns until part of the movable vane clearance portion 115a, 116a as the base portion of the movable vane 115, 116 enters the recessed cutout region of the fixed vane clearance portion 104b, 105b. Accordingly, in the rotary damper 100, each of the volumes of the cells R1, R3 is minimized, and each of the volumes of the cells R2, R4 is maximized. Note that in Fig. 6, the first bidirectional communication path 113 is indicated by a dashed line.

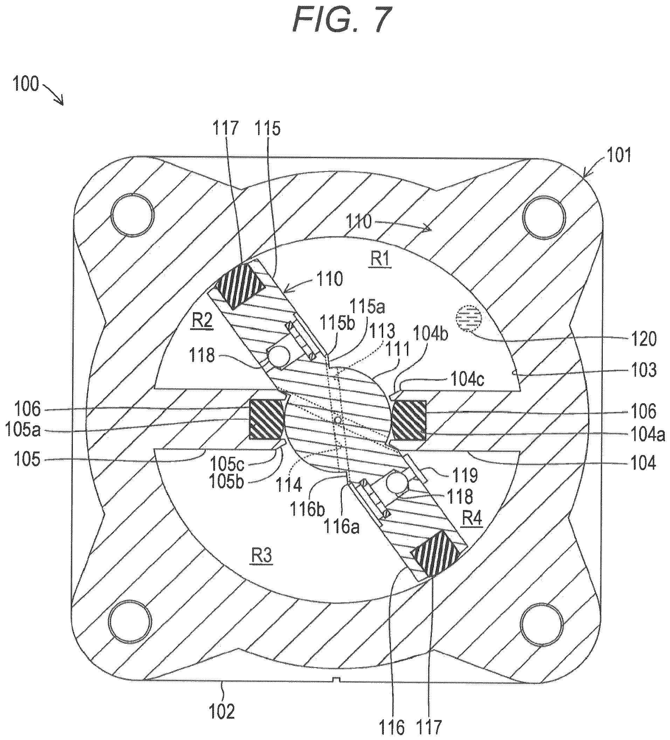

Next, in the rotary damper 100, in a case where the rotor 110 turns leftward as viewed in the figure, the movable vanes 115, 116 turn leftward as viewed in the figure such that each of the volumes of the cells R1, R3 increases and each of the volumes of the cells R2, R4 decreases, as illustrated in Fig. 7. Note that in Fig. 7, each of the first bidirectional communication path 113 and the second bidirectional communication path 114 is indicated by a dashed line.

In this case, the fluid 120 in the cell R2 flows to the cell R1 side through the one-way valve 118 provided at the movable vane 115. Moreover, the fluid 120 in the cell R4 flows to the cell R3 side through the one-way valve 118 provided at the movable vane 116. With this configuration, in a case where the rotor 110 turns leftward as viewed in the figure, the fluid 120 does not flow through the throttle valve 119 and flows through each of the two one-way valves 118, and therefore, no damping force is generated in the rotary damper 100.

In a case where the movable vane 115 comes closest to the fixed vane 105 and the movable vane 116 comes closest to the fixed vane 104, the rotor 110 turns until the end portions 115b, 116b of the movable vane clearance portions 115a, 116a collide with the fixed vane clearance portions 104b, 105b. That is, the rotor 110 turns until part of the movable vane clearance portion 115a, 116a as the base portion of the movable vane 115, 116 enters the recessed cutout region of the fixed vane clearance portion 104b, 105b. Accordingly, in the rotary damper 100, each of the volumes of the cells R1, R3 is maximized, and each of the volumes of the cells R2, R4 is minimized.

As can be understood from description of the operation method above, according to the above-described embodiment, the fixed vanes 104, 105 and the movable vanes 115, 116 of the rotary damper 100 include the fixed vane clearance portions 104b, 105b and the movable vane clearance portions 115a, 116a recessed inwardly in the thickness directions. With this configuration, the rotor 110 turns until part of the base portion of the movable vane 115, 116 enters the fixed vane clearance portion 104b, 105b. Accordingly, even in a case where the rotary damper 100 according to the present invention is decreased in size, such a rotary damper 100 can ensure the turning range of the rotor 110, and can be attached to turning mechanisms in a wide variety of forms.

Further, implementation of the present invention is not limited to that of the above-described embodiment, and various changes can be made without departing from the gist of the present invention. Note that in description of each variation, the same reference numerals are used to represent portions similar to those of the above-described embodiment, and overlapping description will be omitted.

For example, in the above-described embodiment, the rotary damper 100 is configured such that the fixed vane clearance portions 104b, 105b are each formed at the fixed vanes 104, 105 and the movable vane clearance portions 115a, 116a are each formed at the movable vanes 115, 116. With this configuration, as compared to a case where these components are provided at either the fixed vanes 104, 105 or the movable vanes 115, 116, the turning range of the rotor 110 can be ensured in the rotary damper 100 while formation of either the fixed vanes 104, 105 or the movable vanes 115, 116 with a smaller thickness is prevented.

However, it may only be required that the fixed vane clearance portions 104b, 105b and the movable vane clearance portions 115a, 116a are formed so that the turning range of the rotor 110 can be ensured within a necessary angle range. Thus, the rotary damper 100 may include only either the fixed vane clearance portions 104b, 105b or the movable vane clearance portions 115a, 116a. Alternatively, in the rotary damper 100, the fixed vane clearance portion 104b, 105b may be provided at only one of the fixed vane 104 or the fixed vane 105, and the movable vane clearance portion 115a, 116a may be provided at only one of the movable vane 115 or the movable vane 116. Alternatively, in the rotary damper 100, the fixed vane clearance portion 104b, 105b may be provided at only one of both side surfaces of the fixed vane 104, 105 in the thickness direction, and the movable vane clearance portion 115a, 116a may be provided at only one of both side surfaces of the movable vane 115, 116 in the thickness direction.

In the above-described embodiment, the rotary damper 100 is configured such that in a case where the movable vanes 115, 116 come closest to the fixed vanes 104, 105, the end portions 115b, 116b of the movable vane clearance portions 115a, 116a contact and collide with the fixed vane clearance portions 104b, 105b. In other words, the rotary damper 100 is configured such that part of the base portion of the movable vane 115, 116 enters the fixed vane clearance portion 104b, 105b. With this configuration, in the rotary damper 100, damage of the base portion of the movable vane 115, 116 with a smaller thickness can be prevented without the fixed vane 104, 105 contacting the base side (the shaft body 111 side) of the movable vane clearance portion 115a, 116a of the movable vane 115, 116 with respect to the end portion 115b, 116b.

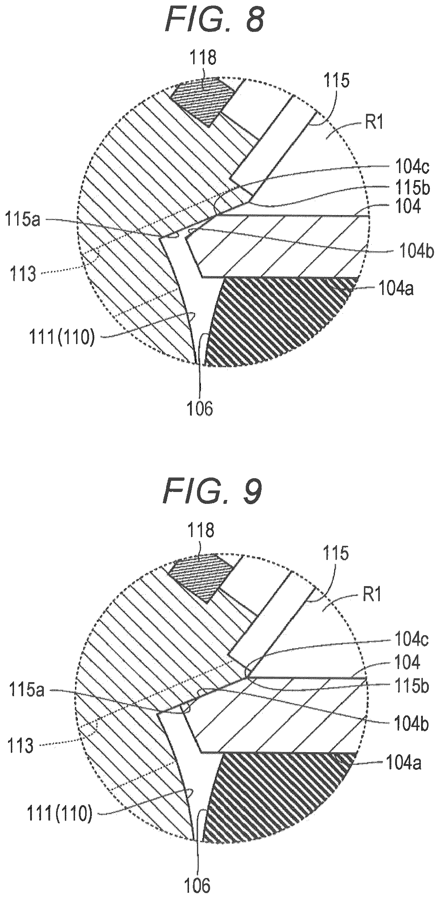

However, as illustrated in Fig. 8, the rotary damper 100 can be also configured such that in a case where the movable vanes 115, 116 come closest to the fixed vanes 104, 105, the end portions 104c, 105c of the fixed vane clearance portions 104b, 105b contact and collide with the movable vane clearance portions 115a, 116a. In other words, the rotary damper 100 can be also configured such that part of the tip end portion of the fixed vane 104, 105 enters the movable vane clearance portion 115a, 116a. According to this configuration, in the rotary damper 100, damage of the tip end portion of the fixed vane 104, 105 with a smaller thickness can be prevented without the movable vane 115, 116 contacting the tip end side of the fixed vane clearance portion 104b, 105b with respect to the end portion 104c, 105c.

As illustrated in Fig. 9, the rotary damper 100 can be also configured such that each of the movable vane clearance portions 115a, 116a and the fixed vane clearance portions 104b, 105b is formed as the inclined surface such that the movable vane clearance portion 115a, 116a is in surface contact with the fixed vane clearance portion 104b, 105b in a case where the movable vane 115, 116 comes closest to the fixed vane 104, 105. In this case, in the rotary damper 100, each of part of the tip end portion of the fixed vane 104, 105 and part of the base portion of the movable vane 115, 116 enters a corresponding one of the movable vane clearance portion 115a, 116a and the fixed vane clearance portion 104b, 105b. In the rotary damper 100, the movable vane clearance portions 115a, 116a and the fixed vane clearance portions 104b, 105b are formed as the inclined surfaces configured to be in surface contact with each other, and therefore, damage of these components upon contact therebetween can be prevented.

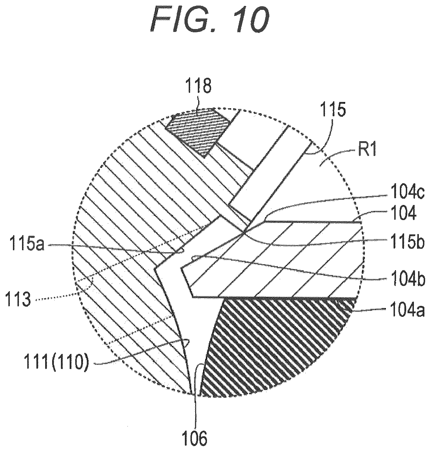

Note that in the above-described embodiment, the angle of the end portion 115b, 116b of the movable vane clearance portion 115a, 116a and the angle of the end portion 104c, 105c of the fixed vane clearance portion 104b, 105b are obtuse angles. However, the angle of the end portion 115b, 116b can be an angle other than the obtuse angle, such as a right angle as illustrated in Fig. 10. The end portions 115b, 116b and the end portions 104c, 105c can be also formed as rounded curved surfaces other than pointed shapes as in the above-described embodiment. In Figs. 8 to 10, the first bidirectional communication path 113 is indicated by a dashed line.

In the above-described embodiment, the rotary damper 100 is configured such that the movable vane clearance portion 115a, 116a contacts the fixed vane clearance portion 104b, 105b. However, the rotary damper 100 can also have such a non-contact configuration that the movable vane clearance portion 115a, 116a does not contact the fixed vane clearance portion 104b, 105b. According to such a configuration, in the rotary damper 100, damage of the movable vane clearance portion 115a, 116a and the fixed vane clearance portion 104b, 105b due to contact therebetween can be prevented.

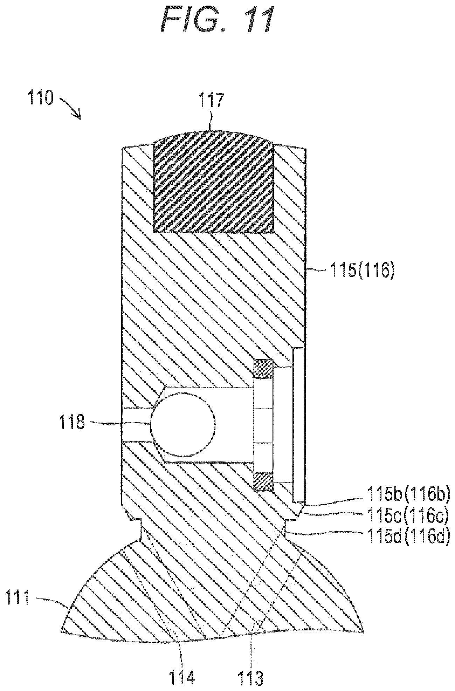

In the above-described embodiment, each of the fixed vane clearance portions 104b, 105b and the movable vane clearance portions 115a, 116a is formed as the single flat inclined surface extending inclined inwardly in the thickness direction with respect to a corresponding one of the side walls of the fixed vanes 104, 105 and the movable vanes 115, 116. However, each of the fixed vane clearance portions 104b, 105b and the movable vane clearance portions 115a, 116a can be formed as one or more flat or curved surfaces extending inwardly in the thickness direction with respect to a corresponding one of the side walls of the fixed vanes 104, 105 and the movable vanes 115, 116. Thus, the movable vane clearance portion 115a, 116a may include, as illustrated in Fig. 11, a single flat inclined surface portion 115c, 116c extending inclined inwardly in the thickness direction with respect to the side wall of the fixed vane 104, 105 and a flat parallel surface portion 115d, 116d extending in parallel with the radial direction of the rotor 110, for example. Note that in Fig. 11, the reference numerals of the inclined surface portion 116c and the parallel surface portion 116d of the movable vane 116 formed symmetrically to the movable vane 115 are also provided with the inclined surface portion 115c and the parallel surface portion 115d.

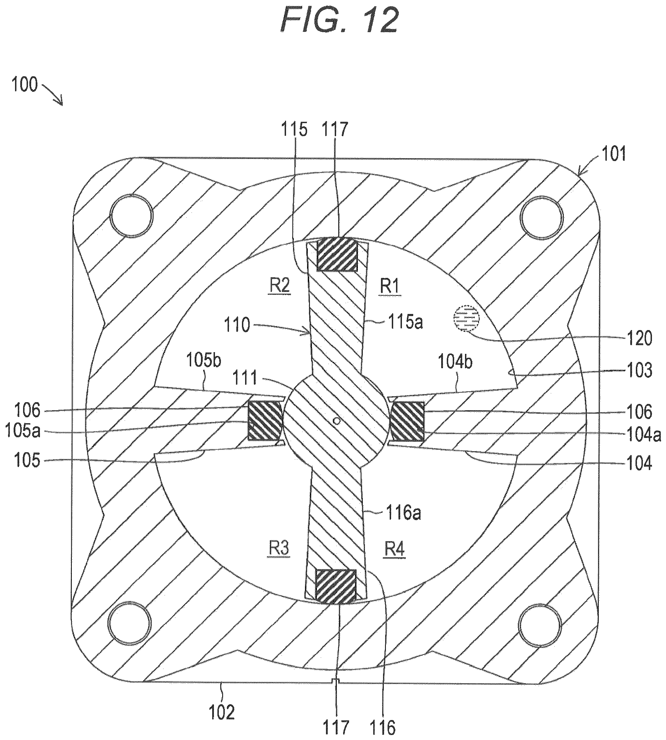

In the above-described embodiment, the rotary damper 100 is configured such that the fixed vane clearance portion 104b, 105b is provided only at the tip end portion of the fixed vane 104, 105 and the movable vane clearance portion 115a, 116a is provided only at the base portion of the movable vane 115, 116. However, the rotary damper 100 can be also configured such that the fixed vane clearance portion 104b, 105b is provided across the entirety of the side wall of the fixed vane 104, 105 and the movable vane clearance portion 115a, 116a is provided across the entirety of the side wall of the movable vane 115, 116 as illustrated in Fig. 12. That is, the fixed vane clearance portion 104b, 105b is formed as such an inclined surface that both side surfaces forming the fixed vane 104, 105 are inclined with the thickness thereof decreasing toward the tip end portion of the fixed vane 104, 105. Moreover, the movable vane clearance portion 115a, 116a is formed as such an inclined surface that both side surfaces forming the movable vane 115, 116 are inclined with the thickness thereof decreasing toward the base portion of the movable vane 115, 116. Note that in Fig. 12, each of the first bidirectional communication path 113, the second bidirectional communication path 114, the one-way valves 118, and the throttle valve 119 is not shown.

In the above-described embodiment, the rotary damper 100 is configured such that the first bidirectional communication path 113 and the second bidirectional communication path 114 are formed in the shaft body 111. Thus, as compared to a configuration in which a one-way valve 118 and a throttle valve 119 with complicated configurations are provided at a shaft body 111, the diameter of the shaft body 111 can be decreased (e.g., equal to or less than 8 mm) in the rotary damper 100 and the configuration of the rotary damper 100 can be easily decreased in size.

However, the rotary damper 100 can be also configured such that the first bidirectional communication path 113 and the second bidirectional communication path 114 are, as in the one-way valves 118 and the throttle valve 119, provided only in at least one of the components other than the shaft body 111, specifically the housing 101 (including the lid 108), the fixed vanes 104, 105, and the movable vanes 115, 116. According to such a configuration, the diameter of the shaft body 111 can be decreased (e.g., equal to or less than 8 mm) in the rotary damper 100 and the configuration of the rotary damper 100 can be more easily decreased in size.

In the above-described configuration, the rotary damper 100 is configured such that part of each of the first bidirectional communication path 113 and the second bidirectional communication path 114 opens at the surface of the shaft body 111 and other part of each of the first bidirectional communication path 113 and the second bidirectional communication path 114 opens at the movable vane 115, 116 through the movable vane clearance portion 115a, 116a. With this configuration, even in a case where the movable vane clearance portions 115a, 116a contact the fixed vane clearance portions 104b, 105b, a state in which the first bidirectional communication path 113 and the second bidirectional communication path 114 constantly communicate with the cells R1 to R4 can be maintained and the rotor 110 can smoothly reciprocatably turn in the rotary damper 100. However, in the rotary damper 100, the first bidirectional communication path 113 and the second bidirectional communication path 114 can open only at the shaft body 111.

In the above-described embodiment, the rotary damper 100 is configured such that the inside of the inner chamber 103 in the housing 101 is divided into the four cells R1 to R4. However, it may only be required that the inner chamber 103 in the rotary damper 100 is divided into at least two or more cells.

In the above-described embodiment, the rotary damper 100 is configured such that the one-way valve 118 is provided at the movable vane 115 and the one-way valve 118 and the throttle valve 119 are provided at the movable vane 116. With this configuration, the damping force is generated only when the movable vane 115 turns to a fixed vane 104 side. However, the direction of turning the rotor 110 for generating the damping force in the rotary damper 100 is a direction determined as necessary according to the specifications of the rotary damper 100, and is not limited to that of the above-described embodiment. Thus, the rotary damper 100 can be, for example, also configured such that the one-way valve 118 and the throttle valve 119 are provided at each of the movable vane 115 and the movable vane 116 to generate the damping force upon each of clockwise turning and counterclockwise turning of the rotor 110.

The rotary damper 100 can be, upon use thereof, attached to a mechanical device, an electrical device, or a tool other than the attachment target object having the movable portion. The attachment target object having the movable portion includes, for example, the seat reclining mechanism, the tailgate, and the glove compartment opening/closing mechanism in the automobile, the base end portion of the swing arm vertically movably supporting the rear wheel of the two-wheeled self-propelled vehicle (the motorcycle), the hinge portion of the opening/closing door of the furniture, and the lifting/lowering mechanism for the lifting/lowering shelf.

### LIST OF REFERENCE SIGNS

- R1 to R4: Cell
- 100: Rotary damper
- 101: Housing
- 102: Housing body
- 103: Inner chamber
- 104,: 105Fixed vane
- 104a, 105a: Groove portion
- 104b, 105b: Fixed vane clearance portion
- 104c, 105c: End portion
- 106: Seal body
- 107: Rotor support portion
- 108: Lid
- 110: Rotor
- 111: Shaft body
- 111a: Coupling portion
- 112: Accumulator
- 113: First bidirectional communication path
- 114: Second bidirectional communication path
- 115, 116: Movable vane
- 115a, 116a: Movable vane clearance portion
- 115b, 116b: End portion
- 115c, 116c: Inclined surface portion
- 115d, 116d: Parallel surface portion
- 117: Seal body
- 118: One-way valve
- 119: Throttle valve
- 120: Fluid

## Claims

1. A rotary damper comprising
a housing having a cylindrical inner chamber liquid-tightly housing fluid and having a fixed vane formed in a wall shape protruding toward a center portion of the inner chamber to block a flow of the fluid in a circumferential direction, and
a rotor having, at an outer peripheral portion of a shaft body sliding on a tip end portion of the fixed vane, a movable vane sliding on an inner peripheral surface of the inner chamber and turning to push the fluid while dividing an inside of the inner chamber into multiple cells, comprising:
at least one of a fixed vane clearance portion recessed inwardly in a thickness direction at the tip end portion of the fixed vane which slides on the shaft body or a movable vane clearance portion recessed inwardly in a thickness direction at a base portion of the movable vane facing the shaft body,
wherein the rotor is turnable until part of the base portion of the movable vane enters the fixed vane clearance portion and/or part of the tip end portion of the fixed vane enters the movable vane clearance portion.

2. The rotary damper according to claim 1, wherein
each of the fixed vane clearance portion and the movable vane clearance portion is provided.

3. The rotary damper according to claim 2, wherein
the movable vane clearance portion and the fixed vane clearance portion are formed such that when the movable vane comes closest to the fixed vane, an end portion of the movable vane clearance portion on a tip end side of the movable vane contacts the fixed vane clearance portion or an end portion of the fixed vane clearance portion on a side opposite to a tip end portion of the fixed vane contacts the movable vane clearance portion.

4. The rotary damper according to claim 2, wherein
the movable vane clearance portion and the fixed vane clearance portion are formed as inclined surfaces configured to be in surface contact with each other.

5. The rotary damper according to any one of claims 1 to 4, wherein
the movable vane clearance portion is formed only at the base portion.

6. The rotary damper according to any one of claims 1 to 5, wherein
the fixed vane clearance portion is formed only at the tip end portion which slides on the shaft body.

7. The rotary damper according to any one of claims 1 to 6, further comprising:
a communication path allowing a bidirectional or unidirectional flow of the fluid between the multiple cells in the internal chamber,
wherein the communication path is not provided in the shaft body, but is provided only in at least one of the housing, the fixed vane, and the movable vane.

8. The rotary damper according to any one of claims 1 to 7, further comprising:
a bidirectional communication path allowing the bidirectional flow of the fluid between the multiple cells in the internal chamber and a unidirectional communication path allowing the unidirectional flow of the fluid,
wherein the bidirectional communication path is provided in at least the shaft body, and
the unidirectional communication path is not provided in the shaft body, but is provided only in at least one of the housing, the fixed vane, and the movable vane.
